(19) Europäisches Patentamt / European Patent Office / Office européen des brevets

(11) **EP 3 037 219 B1**

(12) **EUROPÄISCHE PATENTSCHRIFT**

(45) Veröffentlichungstag und Bekanntmachung des Hinweises auf die Patenterteilung:
**23.03.2022 Patentblatt 2022/12**

(21) Anmeldenummer: **15194734.8**

(22) Anmeldetag: **16.11.2015**

(51) Internationale Patentklassifikation (IPC):
**B25J 9/16** (2006.01)      **G05B 19/42** (2006.01)
**B25J 17/00** (2006.01)     **B25J 18/00** (2006.01)

(52) Gemeinsame Patentklassifikation (CPC):
**B25J 9/1664; B25J 9/1674; G05B 19/42**

(54) **SICHERER ROBOTER MIT BAHNFORTSCHRITTSVARIABLEN**

SECURE ROBOT WITH PATH PROGRESS VARIABLES

ROBOT SUR AYANT DES VARIABLES DE PROGRESSION DE GLISSIERE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **22.12.2014 DE 102014226787**

(43) Veröffentlichungstag der Anmeldung:
**29.06.2016 Patentblatt 2016/26**

(73) Patentinhaber: **KUKA Deutschland GmbH 86165 Augsburg (DE)**

(72) Erfinder:
• **ZIMMERMANN, Uwe 86152 Augsburg (DE)**
• **HIETMANN, Gerhard 86405 Herbertshofen (DE)**

(74) Vertreter: **Mader, Joachim Bardehle Pagenberg Partnerschaft mbB Patentanwälte, Rechtsanwälte Prinzregentenplatz 7 81675 München (DE)**

(56) Entgegenhaltungen:
**EP-A1- 1 927 440      EP-A2- 1 600 833
DE-A1- 10 161 470**

**Beschreibung**

**1. Technischer Bereich**

Die vorliegende Erfindung betrifft ein Verfahren zum Steuern eines Manipulators, und insbesondere zum Steuern eines mehrachsigen Gelenkarmroboters.

**2. Technischer Hintergrund**

Roboter, und insbesondere Industrieroboter, werden für verschiedene Arbeitsprozesse eingesetzt, wie beispielsweise im industriellen Umfeld für die Fertigung, Montage oder Bearbeitung verschiedener Werkstücke. Dabei können Roboter auch einen Arbeitsraum mit einem Menschen teilen, beispielsweise wenn ein Werkstück gleichzeitig von einem Roboter und einem Menschen bearbeitet wird. Solch ein Einsatz bzw. solch ein Arbeitsumfeld wird auch als Mensch-Roboter-Kollaboration (MRK) bezeichnet.

Ein Roboter kann mehrere Achsen umfassen, die frei programmierbar sind. Die eigentliche Mechanik des Roboters ist der Manipulator. Der Manipulator oder Roboterarm kann aus einer Reihe von starren Gliedern bestehen, die durch Gelenke verbunden sind. Die Position bzw. Stellung eines Roboters kann dabei durch die Stellung der einzelnen Gelenke beschrieben werden.

Um zu gewährleisten, dass ein Roboter während des Betriebs nicht mit seiner Umgebung kollidiert und dabei sich und/oder der Umgebung Schaden zufügt, hat sich eine sichere Überwachung einer Roboterbewegung zu einer wichtigen Funktionalität moderner Robotersysteme entwickelt. Dabei bringt insbesondere der Einsatz in MRK strenge Sicherheitsvoraussetzungen mit sich. Beispielsweise muss bei Laserapplikationen sichergestellt werden, dass ein Roboter eine genau definierte Bahn abfährt und von dieser nicht abweicht oder einen definierten Arbeitsraum nicht verlässt. Die meisten Sicherheitssysteme beruhen dabei auf einer präzisen Erfassung von Positionswerten und/oder anderen dynamischen Größen, wie etwa von Geschwindigkeitswerten.

Die Druckschrift EP 1 600 833 A2 betrifft ein Verfahren und eine Vorrichtung zum Betreiben einer Maschine, wie eines Roboters, insbesondere eines Mehrachs-Industrieroboters, wobei ein Bahnabschnitt überwacht in einer Referenzfahrt durchfahren wird.

Die Druckschrift EP 1 927 440 A1 betrifft das Überwachen des Zustands eines Industrieroboters. Dabei werden Referenzwerte für Antriebskomponenten basierend auf einem mathematischen Modell berechnet.

Die Druckschrift DE 101 61 470 A1 betrifft ein Verfahren zur Programmierung zumindest eines Roboters in roboterbasierten Laseranwendungen, insbesondere Laserschweißen und Laserschneiden, bei dem Wegpunkte eines Arbeitsweges des Roboters programmiert werden.

Der vorliegenden Erfindung liegt die Aufgabe zugrunde, ein sicheres Steuern eines Manipulators zu ermöglichen, und insbesondere bestehende Sicherheitskonzepte zu verbessern. Dabei soll insbesondere ein Verfahren bereitgestellt werden, mit welchem ein Roboters flexibel gesteuert werden kann und gleichzeitig eine sichere Überwachung der Roboterbewegung gegeben ist.

Diese und weitere Aufgaben, die beim Lesen der folgenden Beschreibung der Erfindung ersichtlich werden, werden durch den Gegenstand der unabhängigen Ansprüche gelöst.

**3. Inhalt der Erfindung**

Die Erfindung umfasst ein Verfahren gemäß Anspruch 1 zum Steuern eines Manipulators, und insbesondere zum Steuern eines mehrachsigen Gelenkarmroboters.

Vorzugsweise eignet sich das erfindungsgemäße Verfahren dabei zum Steuern eines Manipulators während einer Betriebsfahrt, also im normalen Arbeitsbetrieb, welche vorzugsweise automatisch bzw. programmgesteuert anhand einer Bahnplanung gesteuert wird. Das erfindungsgemäße Verfahren weist dabei ein Bereitstellen einer Mehrzahl von Referenzdatensätzen auf, wobei jeder Referenzdatensatz eine Referenz-Manipulatorstellung beschreibt. Vorzugsweise kann das Bereitstellen auch ein Erstellen der Mehrzahl von Referenzdatensätze umfassen. Vorzugsweise unterscheiden sich die Referenzdatensätze voneinander, sodass diese verschiedene Referenz-Manipulatorstellungen beschreiben. Die Referenzdatensätze können dabei vorteilhaft viele Referenz-Manipulatorstellungen beschreiben, die der Manipulator während eines Fahrens gemäß einer Bahnplanung während beispielsweise einer Referenzfahrt und/oder dem normalen Arbeitsbetrieb einnimmt. Ein Fahren ist hierbei bevorzugt als ein Bewegen oder Verfahren des Tool-Center-Points des Manipulators entlang einer Laufbahn bzw. (Bewegungs-)Bahn zu verstehen, somit versteht man bevorzugt unter dem Fahren des Manipulators eine Bewegung des Manipulators.

Weiterhin weist das erfindungsgemäße Verfahren ein Erfassen einer Ist-Manipulatorstellung auf. Der Fachmann versteht dabei, dass die Begriffe "Referenz-Manipulatorstellung" und "Ist-Manipulatorstellung" oder allgemein der Begriff "Manipulatorstellung" eine Konfiguration des Manipulators beschreiben, oder auch eine Stellung, eine Position oder einen Zustand des Manipulators. Somit kann eine Manipulatorstellung beispielsweise charakteristisch für eine Orientierung oder auch eine Pose des Manipulators sein. Beispielsweise kann eine Manipulatorstellung Achsvariablen oder Achswinkel umfassen, welche eine bestimmte Achsstellung des Manipulators beschreiben. Das Erfassen einer Manipulatorstellung, oder einer Ist-Manipulatorstellung, kann somit mittels entsprechender Sensorik erfolgen, wie beispielsweise mittels Inkrementalgeber. Der Fachmann versteht allerdings, dass eine Manipulatorstellung ferner auch den Zustand von weiteren Zusatzachsen, asynchronen Achsen, Achsen von Zangen und Greifern und auch komplexere Kinematiken, wie beispielsweise kooperierende Roboter, berücksichtigen kann.

Gemäß dem erfindungsgemäßen Verfahren wird ferner, basierend auf der erfassten Ist-Manipulatorstellung und einer zuvor erfassten Ist-Manipulatorstellung, eine Ist-Bahnfortschrittsvariable (Ist-BFV) bestimmt. Die bestimmte Ist-BFV basiert somit auf der momentan erfassten Ist-Manipulatorstellung als auch auf einer Historie, welche zumindest eine zuvor erfasste Ist-Manipulatorstellung umfassen kann. Sie sind somit u.a. charakteristisch für den Fortschritt der Roboterbewegung hinsichtlich der Bahnplanung.

Ferner weist das erfindungsgemäße Verfahren ein Ermitteln einer Referenz-Manipulatorstellung aus zumindest einem der bereitgestellten Referenzdatensätze auf, wobei das Ermitteln auf der bestimmten Ist-BFV basiert. Basierend auf der bestimmten Ist-BFV wird somit zumindest einer der bereitgestellten Referenzdatensätze herangezogen, und eine Referenz-Manipulatorstellung ermittelt.

Weiterhin wird entsprechend dem erfindungsgemäßen Verfahren festgestellt, ob eine Differenz zwischen der ermittelten Referenz-Manipulatorstellung und der erfassten Ist-Manipulatorstellung größer ist als ein vordefinierter Grenzwert. Es wird also überprüft, wie gut die ermittelte Referenz-Manipulatorstellung und die erfasste Ist-Manipulatorstellung übereinstimmen. Der Fachmann versteht, dass die Übereinstimmung zwischen der ermittelten Referenz-Manipulatorstellung und erfassten Ist-Manipulatorstellung im besten Fall, also wenn beispielsweise keine Störungen im Betriebsablauf vorliegen, 100-prozentig ist. Da allerdings in der Realität immer mit gewissen Ungenauigkeiten zu rechnen ist, weiß der Fachmann eine entsprechende Toleranz bzw. Fehlertoleranz einzustellen und den vordefinierten Grenzwert entsprechend festzulegen. Derartige Toleranzgrenzen für das Vergleichen der ermittelten Referenz-Manipulatorstellung und der erfassten Ist-Manipulatorstellung können vorzugsweise in einem entsprechenden Konfigurationsschritt festgelegt werden.

Entsprechend dem erfindungsgemäßen Verfahren wird der Manipulator in Reaktion auf das Feststellen gesteuert. Wenn also festgestellt wird, dass die Differenz zwischen der ermittelten Referenz-Manipulatorstellung und erfassten Ist-Manipulatorstellung größer ist als der vordefinierte Grenzwert, kann der Manipulator entsprechend gesteuert werden, um vorteilhaft auf die festgestellte Abweichung zu reagieren.

Das Steuern umfasst ein Anhalten des Manipulators und/oder ein Einleiten einer Reaktionsstrategie. Der Fachmann versteht, dass wenn die Differenz zwischen der ermittelten Referenz-Manipulatorstellung und der erfassten Ist-Manipulatorstellung größer ist als der vordefinierte Grenzwert, hierauf generell zu reagieren, und ferner wie hierauf zu reagieren ist. Die Wahl der entsprechenden Reaktion kann dabei abhängig von der Anwendung des Manipulators bzw. der vorliegenden Applikation erfolgen. So kann ein Not-Stopp des Manipulators ausgeführt werden, oder auch der Manipulator entsprechend einer vorgegebenen Bahn umorientiert oder repositioniert werden. Zusätzlich kann auch ein Endeffektor in Reaktion auf das Feststellen gesteuert werden. So kann beispielsweise, wenn der Endeffektor einen Laser umfasst, dieser deaktiviert werden, wenn festgestellt wird, dass die Differenz zwischen ermittelter Referenz-Manipulatorstellung und erfasster Ist-Manipulatorstellung größer ist, als der vordefinierte Grenzwert.

Das erfindungsgemäße Verfahren erlaubt es somit eine geeignete Referenz-Manipulatorstellung auszuwählen und die momentane Bewegung bzw. Stellung des Manipulators anhand dieser zu überprüfen. Der Einsatz von Bahnfortschrittsvariablen erlaubt dabei ein effizientes und schnelles Ermitteln der geeigneten Referenz-Manipulatorstellung.

Da die Bahnfortschrittsvariablen basierend auf einer momentanen und zumindest einer vorherigen Ist-Manipulatorstellung bestimmt werden, kann der Roboter auch mit einer Geschwindigkeit bewegt werden, die sich von einer Geschwindigkeit unterscheidet, mit der eine ReferenzFahrt durchgeführt wurde, um die Referenz-Manipulatorstellungen aufzuzeichnen. Somit kann mit dem erfindungsgemäßen Verfahren auch mit verschiedenen Manipulator-Geschwindigkeiten eine genaue Überprüfung der Bewegungen gewährleistet werden.

Jedem Referenzdatensatz ist eine Referenz-Bahnfortschrittsvariable (Referenz-BFV) zugeordnet. Dabei ist insbesondere vorzugsweise jedem Referenzsatz eine eindeutige Referenz-BFV zugeordnet. Die Referenz-BFV eines Referenzsatzes ist somit verschieden von denen der anderen Referenzsätze. Somit kann eine eindeutige Zuordnung zwischen Ist-Manipulatorstellungen und Referenz-Manipulatorstellungen mittels der Bahnfortschrittsvariablen vorgenommen werden.

Weiterhin vorzugsweise umfasst das Ermitteln der Referenz-Manipulatorstellung ein Auswählen eines Referenzdatensatzes basierend auf der bestimmten Ist-BFV. Dieses Auswählen erfolgt dabei derart, so dass die Referenz-BFV des ausgewählten Referenzdatensatzes nächstliegend zu der bestimmten Ist-BFV ist. Es wird also ein bestmöglich passender Referenzdatensatz gewählt, so dass die Differenz zwischen der Referenz-BFV des ausgewählten Referenzdatensatzes und der bestimmten Ist-BFV minimal ist. Die entsprechende Referenz-Manipulatorstellung, die auf diese Art ermittelt wurde, sollte im optimalen (störungsfreien) Fall mit der erfassten Ist-Manipulatorstellung übereinstimmen.

Dadurch, dass nur der Ist-BFV und die einzelnen Referenz-BFVen benötigt werden, um einen passenden Referenzdatensatz zu finden, kann anhand des erfindungsgemäßen Verfahrens sehr effizient die benötigte Referenz-Manipulatorstellung ermittelt werden, um die Bewegung des Manipulators zu überwachen. Eine aufwändige Suche in einem mehrdimensionalen Feld bzw. einer mehrdimensionalen Matrix, wie sie beispielsweise notwendig wäre, wenn anhand von Ist-Achswerten direkt passende Referenz-Achswerte gesucht werden würden, ist vorteilhaft nicht notwendig.

Das Ermitteln der Referenz-Manipulatorstellung umfasst ein Auswählen von zumindest zwei verschiedenen Referenzdatensätzen basierend auf der Ist-BFV, so dass die beiden Referenz-BFVen der ausgewählten Referenzdatensätze nächstliegend zu der bestimmten Ist-BFV sind, und ein Berechnen, basierend auf einer Interpolation der ausgewählten Referenzdatensätze, einer Referenz-Manipulatorstellung. Somit werden zwei Referenzdatensätze herangezogen, die bestmöglich den momentanen Zustand des Manipulators widerspiegeln. Die Referenz-Manipulatorstellung, welche für den folgenden Vergleich mit der erfassten Ist-Manipulatorstellung herangezogen wird, wird dann basierend auf einer Interpolation der beiden ausgewählten Referenzdatensätze bzw. den entsprechenden Referenz-Manipulatorstellungen entsprechend der ausgewählten Referenzdatensätze berechnet. Es ist somit möglich, eine Referenz-Manipulatorstellung aus den Referenzdatensätzen zu erhalten, die bestmöglich zu dem aktuellen Zustand des Manipulators passt, und somit einen präzisen Vergleich bzw. eine präzise Überwachung ermöglicht.

Der Fachmann versteht, dass auch mehr als zwei Referenzdatensätze basierend auf der Ist-BFV (und den jeweiligen Referenz-BFVen) ausgewählt und für die Berechnung der Referenz-Manipulatorstellung herangezogen werden können. So kann beispielsweise, wenn drei verschiedene Referenzdatensätze ausgewählt wurden, eine Referenz-Manipulatorstellung basierend auf einer Spline-Interpolation der entsprechenden Referenz-Manipulatorstellungen der ausgewählten Referenzdatensätze berechnet werden. Je nach Anwendung oder Applikation kann so die Genauigkeit der Überwachung der Bewegung des Manipulators weiter verbessert werden.

Vorzugsweise ist jede Ist-BFV und jede Referenz-BFV mit demselben Algorithmus berechnet worden. Somit können die Referenz-BFV und die Ist-BFV einfach miteinander verglichen werden, um schnell und mit möglichst wenig Rechenaufwand für eine Ist-Manipulatorstellung eine entsprechende Referenz-Manipulatorstellung zu finden. Ferner vorzugsweise ist jede Ist-BFV und jede Referenz-BFV ein Skalar. Folglich wird ein geringer Rechenaufwand benötigt, um entsprechend dem erfindungsgemäßen Verfahren eine passende Referenz-Manipulatorstellung zu ermitteln.

Vorzugsweise basiert die bestimmende Ist-BFV ferner auf einer zuvor erfassten Ist-BFV. Der Fachmann versteht, dass das erfindungsgemäße Verfahren möglichst oft während des Betriebs des Manipulators ausgeführt wird, und vorteilhaft so oft wie möglich. Die zuvor erfasste Ist-Manipulatorstellung bzw. die zuvor erfasste Ist-BFV wurde somit während des Betriebes des Manipulators zu einem vorherigen Zeitpunkt ermittelt. Ferner versteht der Fachmann, dass zu Beginn der Fahrt, also bevor der erste Schritt einer Bahnplanung ausgeführt wird, die entsprechende BFV Nullgesetzt werden kann.

Weiterhin vorzugsweise basiert die bestimmende Ist-BFV ferner auf einer in einem vorherigen Takt erfassten Ist-BFV, und weiter vorzugsweise auf einer in einem unmittelbar vorherigen Takt erfassten Ist-BFV. Somit wird eine bestehende Ist-BFV regelmäßig aktualisiert, so dass diese die Ist-Manipulatorstellung regelmäßig eindeutig beschreibt und zur Ermittlung einer passenden Referenz-Manipulatorstellung verwendet werden kann. Die taktweise Überprüfung erlaubt einen sehr sicheren Einsatz des Manipulators. Vorzugsweise wird das erfindungsgemäße Verfahren zu jedem Interpolationstakt (IPO-Takt) durchgeführt, welcher je nach den in einer Steuerungseinheit des Robotersystems eingesetzten Komponenten in einem weiten Bereich frei wählbar sein kann, und beispielsweise etwa zwischen 100 $\mu$s und 12 ms liegen kann.

Vorzugsweise umfasst jede Referenz-Manipulatorstellung Referenz-Achswerte und jede Ist-Manipulatorstellung Ist-Achswerte. Weiter vorzugsweise umfasst das Bestimmen der Ist-BFV ein Aufsummieren der Änderungen der Ist-Achswerte und weiter vorzugsweise ein Aufsummieren der Beträge der Änderungen der Ist-Achswerte. Folglich ist die Bahnfortschrittsvariable in jedem Fall eindeutig, da diese nur größer werden kann. Weiterhin vorzugsweise bezieht sich die Änderung der Ist-Achswerte auf die Änderung der Ist-Achswerte seit dem unmittelbar vorangegangenen Takt.

Weiter vorzugsweise umfasst das Bestimmen der Ist-BFV ferner ein Hinzuzählen der aufsummierten Änderungen der Ist-Achswerte zu der zuvor erfassten Ist-BFV. Um die Ist-BFV zu bestimmen, wird somit eine vorher bestimmte Ist-BFV um die Summe der Achsänderungen erhöht, wobei die Summe der Achsänderungen vorzugsweise die Summe der Beträge der Achsänderungen umfasst. Jede Bewegung des Manipulators führt dann zu einer größeren Ist-BFV, so dass jeder, aus der Bewegung resultierenden, Ist-Manipulatorstellung eine eindeutige Ist-BFV zugeordnet wird.

Vorzugsweise weist der Manipulator interne Sensoren auf, oder ist mit externen Sensoren verbunden. Besonders bevorzugt können dabei Drehmomentsensoren in dem Manipulator integriert sein. Ferner umfasst jede Referenz-Manipulatorstellung und die erfasste Ist-Manipulatorstellung Sensordaten. Somit basiert das Feststellen, ob eine Differenz zwischen der ermittelten Referenz- Manipulatorstellung und der erfassten Ist-Manipulatorstellung größer ist als ein vordefinierter Grenzwert, auch auf einem Vergleich der Sensordaten. Damit kann beispielsweise überprüft werden, ob Ist-Drehmomente entsprechenden Referenz-Drehmomenten entsprechen. Falls dies nicht der Fall ist, kann vorteilhaft die Bewegung des Manipulators unterbrochen werden. Solch ein Vergleich eignet sich insbesondere für den Einsatz in MRK, um Personenschäden zu vermeiden. Vorzugsweise kann jede Referenz-Manipulatorstellung und die erfasste Ist-Manipulatorstellung auch weitere Daten umfassen, wie beispielsweise Schaltaktionen, welche folglich mittels der vorliegenden Erfindung auch überwacht werden. Welche Daten erfasst und überwacht werden sollen kann in einem entsprechenden Konfigurationsschritt festgelegt werden.

Vorzugsweise ist eine Bahnplanung des Manipulators in mehrere Bewegungsätze unterteilt, und jedem Referenzdatensatz ist ferner eine Referenz-Bewegungssatznummer zugeordnet. Die Bewegungssatznummern kennzeichnen dabei einen entsprechenden Bewegungssatz. Dabei haben mindestens zwei Referenzdatensätze eine gleiche Referenz-Bewegungssatznummer. Vorzugsweise ist jedem Referenzdatensatz mit gleicher Referenz-Bewegungssatznummer eine ungleiche Referenz-BFV zugeordnet. Die Verwendung von Bewegungssatznummern bringt dabei mit sich, dass die BFV nicht global für das gesamte Roboterprogramm bestimmt werden muss, da dies unter Umständen zu sehr großen Werten führen würde. Mittels der Bewegungssatznummern werden die BFVen lokal pro Bewegungsatz ermittelt. Somit können Rechenressourcen effizienter eingesetzt werden.

Weiterhin vorzugsweise weist das erfindungsgemäße Verfahren ein Erfassen einer Ist-Bewegungssatznummer auf, und das Ermitteln der Referenz-Manipulatorstellung basiert ferner auf der erfassten Ist-Bewegungssatznummer. Dies hat den Vorteil, dass das Bahnprogramm nicht von Beginn an gestartet werden muss, sondern flexibel per Satzanwahl erfolgen kann. Somit kann die Bewegung des Manipulators zu mehreren beliebigen Stellen beispielsweise eines Bahnprogramms gestartet werden.

Vorzugsweise weist das Bereitstellen der Mehrzahl von Referenzdatensätze folgende Schritte auf: Fahren des Manipulators; Erfassen einer Mehrzahl von Referenz-Manipulatorstellungen; Bestimmen, für jede Referenz-Manipulatorstellung, eine Referenz-BFV, und Erstellen einer Mehrzahl von Referenzdatensätzen, wobei jeder Referenzdatensatz eine der erfassten Referenz-Manipulatorstellungen beschreibt und jedem Referenzdatensatz eine der bestimmten Referenz-BFV zugeordnet ist. Vorzugsweise wird bei solch einer Referenzfahrt die Bahn gefahren, die auch während des Betriebs durch den Manipulator gefahren wird. Weiter vorzugsweise wird die Referenz-BFV dabei genauso gebildet, wie die Ist-BFV. Weiterhin vorzugsweise entsprechen die Parameter, welche die Manipulatorstellung beschreiben, den Parametern, welche die Ist-Manipulatorstellungen während dem normalen Betrieb des Roboters beschreiben.

Erfindungsgemäß werden somit aktuell gemessene Ist-Werte, welche eine Ist-Manipulatorstellung beschreiben, mit hinterlegten bzw. bereitgestellten Referenz-Werten verglichen. Vorteilhaft werden die Werte dabei nicht bezüglich der Zeit, sondern bezüglich des Raumpunktes verglichen. Während des Betriebs und während einer überwachten Referenzfahrt werden beispielsweise in jedem Interpolationstakt die Bahnfortschrittsvariablen gebildet, und für den Vergleich zwischen Referenz-Werten und Ist-Werten herangezogen.

Grundsätzlich können die Bahnfortschrittsvariablen auf unterschiedlicher Art gebildet werden, allerdings sollten die Bahnfortschrittsvariablen vorzugsweise vorteilhaft zumindest eindeutig, geschwindigkeitsunabhängig und unabhängig von der Bewegungsart sein. Somit ist vorteilhaft die Sicherstellung des Bewegungsverhaltens des Manipulators bezüglich einer Referenzfahrt auch bei unterschiedlichen Geschwindigkeiten ermöglicht. Ferner versteht der Fachmann, dass zur Bildung der Bahnfortschrittsvariablen keine spezifischen Bahnplanungskenntnisse erforderlich sind. Folglich lässt sich das erfindungsgemäße Verfahren zum Beispiel auch in einer Sicherheitssteuerung einfach einbinden. Beispielsweise kann ein Spline-Bahnparameter als BFV verwendet werden. Das erfindungsgemäße zyklische Aktualisieren der BFV, vorzugsweise basierend auf Änderungen von Achswinkeln, ist dabei besonders vorteilhaft, da dieses Verfahren unabhängig von der Bewegungsart des Manipulators ist.

Ferner umfasst die vorliegende Erfindung ein Robotersystem gemäß Anspruch 12, welches einen Manipulator und eine Steuerung umfasst. Die Steuerung ist dabei eingerichtet, einen Manipulator entsprechend dem erfindungsgemäßen Verfahren zu steuern. Hierfür kann die Steuerung insbesondere entsprechende Module bereitstellen, welche einen oder mehrere Schritte des erfindungsgemäßen Verfahrens ausführen können. Weiterhin umfasst die vorliegende Erfindung ein computer-lesbares Medium, welches Instruktionen enthält, welche, wenn auf einem Computer ausgeführt, Schritte zum Steuern eines Manipulators entsprechend dem erfindungsgemäßen Verfahren ausführen.

## 4. Ausführungsbeispiele

Im Folgenden wird die Erfindung anhand der beiliegenden Figuren näher beschrieben. Dabei zeigen:

Fig. 1    den schematischen Ablauf einer erfindungsgemäßen Referenzfahrt, und

Fig. 2    den schematischen Ablauf einer erfindungsgemäßen Betriebsfahrt.

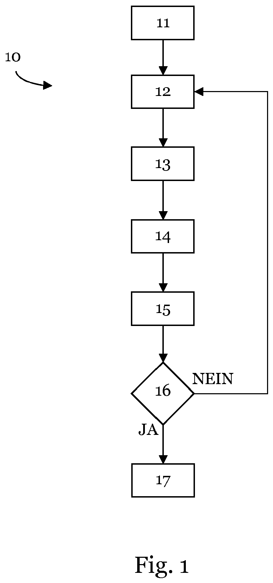

In Fig. 1 ist schematisch der Ablauf 10 einer Referenzfahrt dargestellt, entsprechend dem erfindungsgemäßen Verfahren. Der Fachmann versteht, dass eine Referenzfahrt üblicherweise vor einer Betriebsfahrt durchgeführt wird, um Referenzwerte für die spätere Überwachung während der Betriebsfahrt aufzuzeichnen. Das dargestellte Verfahren 10 beginnt bei Schritt 11. Im Schritt 12 werden während eines Interpolationstaktes (hier beispielsweise Takt $t_5$) eine momentane Satznummer und die momentanen Referenz-Achswinkel erfasst.

Im (darauf) folgenden Schritt 13 wird eine Referenz-Bandfortschrittsvariable für den momentanen Takt gebildet.

Hierfür wird wie folgt die Summe der Achsänderungen gebildet:

$$a_{t5} = |(A_1)_{t5}\text{-}(A_1)_{t4}| + ... + |(A_m)_{t5}\text{-}(A_m)_{t4}|,$$

wobei $a_{t5}$ die Summe der Veränderung der Achswinkel gegenüber der vorherigen Position der Achsen im vorherigen Takt $t_4$ beschreibt, und $A_m$ der absolute Achswinkel der entsprechenden Achse m ist. Der Fachmann versteht, dass somit beispielsweise für einen 6-Achs-Roboter m=6 ist. Anschließend wird eine zuvor bestimmte BFV um die berechnete Summe der Achsänderungen wie folgt erhöht:

$$BFV_{t5} = BFV_{t4} + a_{t5}$$

Für den ersten Takt eines Roboterprogramms oder eines Bewegungssatzes wird die initiale $BFV_{t0}$ Nullgesetzt. Die in Schritt zwölf erfasste Satznummer wird nicht für die Berechnung der BFV verwendet.

Im Schritt 14 werden weitere Referenz-Daten erfasst, wie beispielsweise Referenz-Drehmomente. Ferner können auch Referenz-Schaltaktionen erfasst werden. Welche weiteren Referenz-Daten erfasst werden sollen, wurde bevorzugt in einem vorangegangenen Konfigurationsschritt festgelegt. Im folgenden Schritt 15 werden in einem Referenzwertspeicher die in Schritt 12 erfassten Referenz-Achswinkel und Satznummer, die in Schritt 14 erfassten sonstigen Referenz-Daten, zusammen mit der in Schritt 13 bestimmten Bahnfortschrittsvariablen (als Referenz-BFV) abgespeichert.

Bei der Entscheidung 16 wird überprüft, ob mit dem momentanen Takt $t_5$ das Programm endet. Falls dies der Fall ist, endet das Verfahren 10 in Schritt 17. Andernfalls wird die Takt-Zahl um 1 erhöht und das Verfahren bei Schritt 12 für den neuen Takt $t_6$ fortgeführt.

Die somit während der Referenzfahrt aufgenommene Referenzdatenbank umfasst einen Referenzdatensatz für jeden Takt. In der folgenden Tabelle ist exemplarisch die Struktur einer solchen Referenzdatenbank beispielhaft dargestellt.

| Lesetakt | Bewegungssatznummer | Referenz-BFV | Sonstige Referenzdaten (hier: Achswerte) |
|---|---|---|---|
| 1 | 1 | 12 | $A_1 = 2$, $A_2 = 8$, $A_3 = 5$, $A_4 = 3$ |
| 2 | 1 | 50 | $A_1 = 10$, $A_2 = 2$, $A_3 = 9$, $A_4 = 23$ |
| 3 | 1 | 123 | $A_1 = 22$, $A_2 = 31$, $A_3 = 15$, $A_4 = 49$ |
| ... | ... | ... | |
| 121 | 1 | 124754 | $A_1 = 57$, $A_2 = 71$, $A_3 = 25$, $A_4 = 13$ |
| 122 | 2 | 15 | $A_1 = 61$, $A_2 = 68$, $A_3 = 19$, $A_4 = 11$ |
| 123 | 2 | 50 | $A_1 = 51$, $A_2 = 75$, $A_3 = 8$, $A_4 = 18$ |
| ... | ... | ... | |
| 1032 | 17 | 46897 | $A_1 = 175$, A2 = 4, $A_3 = 95$, $A_4 = 29$ |

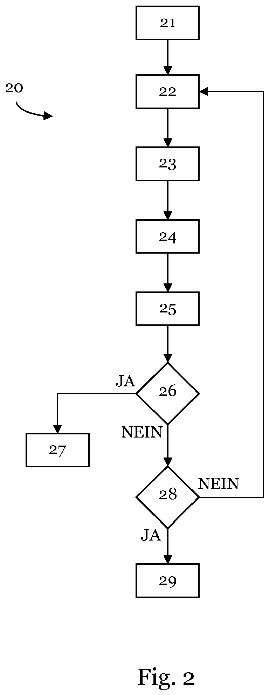

In Fig. 2 ist ein beispielhafter Ablauf 20 einer Betriebsfahrt dargestellt. Der Fachmann versteht, dass eine Betriebsfahrt im normalen Arbeitsbetrieb des Manipulators durchgeführt wird, und hierfür vorteilhaft die mit beispielsweise Referenzfahrt 10 erfasste Referenzdatenbank zur Verfügung steht. Das Verfahren 20 beginnt in Schritt 21. Im Schritt 22 werden während eines Interpolationstaktes (hier beispielsweise Takt $t_{121}$) eine momentane Satznummer und die momentanen Ist-Achswinkel erfasst.

Im folgenden Schritt 23 wird eine Ist-BFV für den momentanen Takt gebildet. Hierzu wird vorteilhaft dasselbe Verfahren bzw. derselbe Algorithmus verwendet, wie auch während der Referenzfahrt 10 zur Bildung der Referenz-BFVen. Im nächsten Schritt 24 werden weitere Ist-Daten erfasst, wie beispielsweise Ist-Drehmomente. Ferner können auch Ist-Schaltaktionen erfasst werden. Welche weiteren Ist-Daten erfasst (und folglich auch überwacht) werden sollen, wurde bevorzugt in einem vorangegangenen Konfigurationsschritt festgelegt.

Im folgenden Schritt 26 werden Referenzdaten aus dem Referenzwertspeicher gemäß der in Schritt 22 erfassten Satznummer und der in Schritt 23 gebildeten Ist-BFV ermittelt. Hierfür wird vorteilhaft eine Anfrage umfassend die Satznummer und die Ist-BFV an den Referenzwertspeicher geleitet, und ein bestpassender Referenzdatensatz von diesem Referenzwertspeicher in Antwort auf die Anfrage zur Verfügung gestellt. Beispielsweise, mit Bezug auf die oben dargestellte Tabelle, wurde während des Betriebsmodus in Takt $t_{121}$ ein BFV von 48 ermittelt bei einem aktuellen Bewegungssatz **2**. Mittels dieser beiden Werte kann aus den Referenzdaten schnell der entsprechende (d.h. nächstgelegene) Referenzdatensatz gefunden werden. In dem Beispiel, welches in der obigen Tabelle dargestellt ist, wäre dies der im Lesetakt 123 während der Referenzfahrt abgespeicherte Datensatz mit der Referenz-BFV 50, da dieser der Ist-BFV von 48 am nächsten kommt. Die zugehörigen Referenzdaten (in dem Beispiel Achswerte $A_1$ - $A_4$) werden im Folgenden für die Überprüfung verwendet.

Bei der Entscheidung 26 werden die Ist-Achswerte mit den Referenz-Achswerten verglichen. Vorteilhaft werden auch die weiteren Daten, wie beispielsweise Drehmomente und/oder Schaltaktionen, verglichen. Hierfür wird überprüft, ob eine Differenz zwischen diesen Werten größer ist als ein vordefinierter Grenzwert, wobei der Grenzwert einer eingestellten Toleranz entspricht. Die Toleranz kann ebenfalls in einem vorangegangenen Konfigurationsschritt festgelegt worden sein. Falls dabei festgestellt wird, dass die Differenz zu groß ist, d.h. keine Übereinstimmung vorliegt, wird im Schritt 27 der Roboter gestoppt. Andernfalls, d.h. bei Übereinstimmung, ist sichergestellt, dass sich der Manipulator am gleichen Raumpunkt befindet wie bei der Referenzfahrt. In diesem Fall wird das Verfahren im Schritt 28 fortgeführt.

Bei der Entscheidung 28 wird überprüft, ob mit dem momentanen Takt $t_{121}$ das Programm endet. Falls dies der Fall ist, endet das Verfahren in Schritt 29. Andernfalls wird die Takt-Zahl um 1 erhöht und das Verfahren folglich in Schritt 22 für diesen nächsten Takt $t_{122}$ fortgeführt.

**Patentansprüche**

1.    Verfahren zum Steuern eines Manipulators, und insbesondere eines mehrachsigen Gelenkarmroboters, aufweisend folgende Schritte:

Bereitstellen einer Mehrzahl von Referenzdatensätzen, wobei jedem Referenzdatensatz eine Referenz-Bahnfortschrittsvariable (Referenz-BFV) zugeordnet ist, und wobei jeder Referenzdatensatz eine Referenz-Manipulatorstellung beschreibt, wobei die Referenz-Manipulatorstellung eine Referenz-Achsstellung des Manipulators beschreibt, die der Manipulator gemäß einer Bahnplanung während einer Referenzfahrt einnimmt;

Erfassen einer Ist-Manipulatorstellung, wobei die Ist-Manipulatorstellung eine Ist-Achsstellung des Manipulators beschreibt, die der Manipulator gemäß der Bahnplanung während einer Betriebsfahrt einnimmt;

Bestimmen eines Wertes für eine Ist-Bahnfortschrittsvariable (Ist-BFV), wobei die Bahnfortschrittsvariable den Fortschritt der Bahnplanung beschreibt unabhängig von einer Geschwindigkeit des Manipulators, wobei der Wert für die Ist-BFV bestimmt wird aus der erfassten Ist-Manipulatorstellung und einer zuvor erfassten Ist-Manipulatorstellung;

Auswählen von zumindest zwei verschiedenen Referenzdatensätzen basierend auf der Ist-BFV, so dass die Werte der beiden Referenz-BFV der ausgewählten Referenzdatensätze nächstliegend zu der dem bestimmten Wert der Ist-BFV sind, und Berechnen einer Referenz-Manipulatorstellung basierend auf einer Interpolation der ausgewählten Referenzdatensätze;

Feststellen, ob eine Differenz zwischen der berechneten Referenz-Manipulatorstellung und der erfassten Ist-Manipulatorstellung größer ist als ein vordefinierter Grenzwert, und

in Reaktion auf das Feststellen, dass eine Differenz zwischen der ermittelten Referenz-Manipulatorstellung und der erfassten Ist-Manipulatorstellung größer ist als der vordefinierte Grenzwert: Anhalten des Manipulators, und/oder Umorientieren oder Repositionieren des Manipulators.

2.    Verfahren nach Anspruch 1, wobei vorzugsweise jedem Referenzdatensatz eine Referenz-BFV mit einem eindeutigen Wert zugeordnet ist.

3.    Verfahren nach einem der vorangegangenen Ansprüche, wobei der Wert der Ist-BFV und die Werte der Referenz-BFV Skalar-Werte sind.

4.    Verfahren nach einem der vorangegangenen Ansprüche, wobei das Bestimmen des Wertes der Ist-BFV ferner auf einem Wert einer zuvor erfassten Ist-BFV und vorzugsweise auf einem Wert einer in einem vorherigen Takt erfassten Ist-BFV und weiter vorzugsweise auf einem Wert einer in einem unmittelbar vorherigen Takt erfassten Ist-BFV basiert.

5.    Verfahren nach einem der vorangegangenen Ansprüche, wobei jede Referenz-Manipulatorstellung Referenz-Achswerte umfasst und wobei jede Ist-Manipulatorstellung Ist-Achswerte umfasst.

6.    Verfahren nach Anspruch 5, wobei das Bestimmen des Wertes der der Ist-BFV ein Aufsummieren der Änderungen der Ist-Achswerte und vorzugsweise ein Aufsummieren der Beträge der Änderungen der Ist-Achswerte umfasst, wobei sich die Änderung der Ist-Achswerte weiter vorzugsweise auf die Änderung der Ist-Achswerte seit dem unmittelbar vorangegangenen Takt bezieht.

7. Verfahren nach Anspruch 6, wobei das Bestimmen des Wertes der Ist-BFV ferner ein Hinzuzählen der aufsummierten Änderungen der Ist-Achswerte zu dem Wert der zuvor erfassten Ist-BFV umfasst.

8. Verfahren nach einem der vorangegangenen Ansprüche, wobei der Manipulator Sensoren aufweist und jede Referenz-Manipulatorstellung und die erfasste Ist-Manipulatorstellung ferner Sensordaten umfassen, wobei vorzugsweise die Sensoren Drehmomentsensoren umfassen und die Sensordaten Drehmomente umfassen.

9. Verfahren nach einem der vorangegangenen Ansprüche,
wobei die Bahnplanung des Manipulators in mehrere Bewegungssätze unterteilt ist und wobei jedem Referenzdatensatz ferner eine Referenz-Bewegungssatznummer zugeordnet ist, wobei mindestens zwei Referenzdatensätze eine gleiche Referenz-Bewegungssatznummer haben, und wobei vorzugsweise jedem Referenzdatensatz mit gleicher Referenz-Bewegungssatznummer eine ungleiche Referenz-BFV zugeordnet ist.

10. Verfahren nach Anspruch 9, weiterhin aufweisend ein Erfassen einer Ist-Bewegungssatznummer, und wobei das Berechnen der Referenz-Manipulatorstellung ferner auf der erfassten Ist-Bewegungssatznummer basiert.

11. Verfahren nach einem der vorangegangenen Ansprüche, wobei das Bereitstellen der Mehrzahl von Referenzdatensätzen folgende Schritte aufweist:

Fahren des Manipulators gemäß der Bahnplanung;
Erfassen einer Mehrzahl von Referenz-Manipulatorstellungen;
Bestimmen, für jede Referenz-Manipulatorstellung, eine Referenz-BFV, und
Erstellen einer Mehrzahl von Referenzdatensätzen, wobei jeder Referenzdatensatz eine der erfassten Referenz-Manipulatorstellungen beschreibt und jedem Referenzdatensatz eine der bestimmten Referenz-BFV zugeordnet ist.

12. Robotersystem, umfassend einen Manipulator und eine Steuerung, wobei die Steuerung eingerichtet ist die Schritte zum Steuern eines Manipulators nach einem der Ansprüche 1 - 11 durchzuführen.

**Claims**

1. Method for controlling a manipulator, and in particular a multi-axis articulated arm robot, comprising the following steps:

Providing a plurality of reference data sets, wherein each reference data set is assigned a reference path progress variable (reference BFV), and wherein each reference data set describes a reference manipulator position, wherein the reference manipulator position describes a reference axis position of the manipulator which the manipulator takes according to path planning during a reference run;
detecting an actual manipulator position, wherein the actual manipulator position describes an actual axis position of the manipulator, which the manipulator takes according to the path planning during an operational run;
determining a value for an actual path progress variable (actual BFV), the path progress variable describing the progress of the path planning independent of a speed of the manipulator, wherein the value for the actual BFV is determined from the detected actual manipulator position and a previously detected actual manipulator position;
selecting at least two different reference data sets based on the actual BFV, such that the values of the two reference BFVs of the selected reference data sets are closest to that of the determined value of the actual BFV, and
calculating a reference manipulator position based on an interpolation of the selected reference data sets;
identifying whether a difference between the calculated reference manipulator position and the detected actual manipulator position is greater than a predefined threshold value; and
in response to identifying that a difference between the calculated reference manipulator position and the detected actual manipulator position is greater than the predefined limit value: stopping the manipulator, and/or reorienting or repositioning the manipulator.

2. The method according to claim 1, wherein preferably each reference data set is assigned a reference BFV with a distinct value.

3. The method according to one of the preceding claims, wherein the value of the actual BFV and the values of the reference BFV are scalar values.

4. The method according to one of the preceding claims, wherein determining the value of the actual BFV is further based on a value of a previously detected actual BFV, and preferably on a value of an actual BFV detected in a previous cycle, and further preferably on a value of an actual BFV detected in an immediately previous cycle.

5. The method of one of the preceding claims, wherein each reference manipulator position comprises reference axis values, and wherein each actual manipulator position comprises actual axis values.

6. The method according to claim 5, wherein determining the value of the actual BFV comprises summing the changes in the actual axis values, and preferably summing the amounts of the changes in the actual axis values, wherein the change in the actual axis values further preferably relates to the change in the actual axis values since the immediately preceding cycle.

7. The method according to claim 6, wherein determining the value of the actual BFV further comprises adding the summed changes of the actual axis values to the value of the previously detected actual BFV.

8. The method according to one of the preceding claims, wherein the manipulator comprises sensors and each reference manipulator position and the sensed actual manipulator position further comprise sensor data, wherein preferably the sensors comprise torque sensors and the sensor data comprise torques.

9. The method according to one of the preceding claims,
wherein the path planning of the manipulator is divided into a plurality of motion data sets, and wherein each reference data set is further associated with a reference motion data set number, wherein at least two reference data sets have an equal reference motion data set number, and wherein preferably each reference data set having an equal reference motion data set number is associated with an unequal reference BFV.

10. The method according to claim 9, further comprising detecting an actual motion data set number, and wherein calculating the reference manipulator position is further based on the detected actual motion data set number.

11. The method according to one of the preceding claims, wherein providing the plurality of reference data sets comprises the following steps:

   Driving the manipulator according to the path planning;
   detecting a plurality of reference manipulator positions;
   determining, for each reference manipulator position, a reference BFV; and
   creating a plurality of reference data sets, each reference data set describing one of the acquired reference manipulator positions and each reference data set being assigned one of the determined reference BFVs.

12. A robotic system comprising a manipulator and a controller, wherein the controller is configured to perform steps for controlling a manipulator according to one of claims 1-11.

**Revendications**

1. Procédé de commande d'un manipulateur, et en particulier d'un robot à bras articulé multiaxe, comportant les étapes suivantes :

   obtention d'une pluralité d'ensembles de données de référence, une variable de progression sur trajectoire de référence (VPT de référence) à chaque ensemble de données de référence étant associée, et chaque ensemble de données de référence décrivant une position de manipulateur de référence, la position de manipulateur de référence décrivant une position d'axe de référence du manipulateur que le manipulateur adopte conformément à une planification de trajectoire pendant un trajet de référence ;
   détection d'une position de manipulateur réelle, la position de manipulateur réelle décrivant une position d'axe réelle du manipulateur que le manipulateur adopte conformément à la planification de trajectoire pendant un trajet de fonctionnement ;

détermination d'une valeur pour une variable de progression sur trajectoire réelle (VPT réelle), la variable de progression sur trajectoire décrivant la progression de la planification de trajectoire indépendamment d'une vitesse du manipulateur, la valeur pour la VPT réelle étant déterminée à partir de la position de manipulateur réelle détectée et une position de manipulateur réelle préalablement détectée ;

sélection d'au moins deux ensembles de données de référence différents sur la base de la VPT réelle, de façon que les valeurs des deux VPT de référence soient les plus proches possibles de la valeur déterminée de la VPT réelle, et calcul d'une position de manipulateur de référence sur la base d'une interpolation des ensembles de données de référence sélectionnés ;

vérification si une différence entre la position de manipulateur de référence calculée et la position de manipulateur réelle détectée est supérieure à une valeur limite prédéfinie, et

en réaction à la vérification qu'une différence entre la position de manipulateur de référence déterminée et la position de manipulateur réelle détecté est supérieure à la valeur limite prédéfinie : arrêt du manipulateur et/ou réorientation ou repositionnement du manipulateur.

2. Procédé selon la revendication 1, dans lequel une VPT de référence avec une valeur univoque est associée de préférence à chaque ensemble de données de référence.

3. Procédé selon une des revendications précédentes, dans lequel la valeur de la VPT réelle et les valeurs de la VPT de référence sont des valeurs scalaires.

4. Procédé selon une des revendications précédentes, dans lequel la détermination de la valeur de la VPT réelle est en outre basée sur une valeur d'une VPT réelle préalablement détectée et, de préférence, sur une valeur d'une VPT réelle détectée dans une cadence précédente et, plus préférentiellement, sur une valeur d'une VPT réelle détectée dans une cadence immédiatement précédente.

5. Procédé selon une des revendications précédentes, dans lequel chaque position de manipulateur de référence inclut des valeurs d'angle de référence, et chaque position de manipulateur réelle inclut des valeurs d'angle réelles.

6. Procédé selon la revendication 5, dans lequel la détermination de la valeur de la VPT réelle inclut une sommation des modifications des valeurs d'angle réelles et, de préférence, une sommation des valeurs des modifications des valeurs d'angle réelles, dans lequel la modification des valeurs d'angle réelles se rapporte plus préférentiellement à la modification des valeurs d'angle réelles depuis la cadence immédiatement antérieure.

7. Procédé selon la revendication 6, dans lequel la détermination de la valeur de la VPT réelle inclut en outre un ajout des modifications sommées des valeurs d'angle réelles à la valeur de la VPT réelle préalablement détectée.

8. Procédé selon une des revendications précédentes, dans lequel le manipulateur comporte des capteurs et chaque position de manipulateur de référence et la position de manipulateur réelle détectée inclut en outre des données de capteurs, de préférence dans lequel les capteurs incluent des capteurs de couple de rotation et les données de capteurs incluent des couples de rotation.

9. Procédé selon une des revendications précédentes, dans lequel la planification de trajectoire du manipulateur est divisée en plusieurs ensembles de déplacements, et dans lequel un numéro d'ensemble de déplacements de référence est en outre associé à chaque ensemble de données de référence, dans lequel au moins deux ensembles de données de référence ont un numéro d'ensemble de déplacements de référence identique, et dans lequel de préférence une VPT de référence non identique est associée à chaque ensemble de données de référence à numéro d'ensemble de déplacements de référence identique.

10. Procédé selon la revendication 9, comportant également une détection d'un numéro d'ensemble de déplacements réel, et dans lequel le calcul de la position de manipulateur de référence est en outre basé sur le numéro d'ensemble de déplacements réel détecté.

11. Procédé selon une des revendications précédentes, dans lequel l'obtention de la pluralité d'ensembles de données de référence comporte les étapes suivantes :

déplacement du manipulateur conformément à la planification de trajectoire ;

détection d'une pluralité de positions de manipulateur de référence ;

détermination, pour chaque position de manipulateur de référence, d'une VPT de référence, et

création d'une pluralité d'ensembles de données de référence, chaque ensemble de données de référence décrivant une des positions de manipulateur de référence détectées,

et à chaque ensemble de données de référence étant associée une des VPT de référence déterminées.

12. Système de robot incluant un manipulateur et une commande, dans lequel la commande est agencée pour exécuter les étapes de commande d'un manipulateur selon une des revendications 1 à 11.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1600833 A2
- EP 1927440 A1

- DE 10161470 A1